# EUROPÄISCHE PATENTANMELDUNG

(11) **EP 4 663 508 A1**
(43) Veröffentlichungstag der Anmeldung: **17.12.2025**
(21) Anmeldenummer: 25178695.0
(22) Anmeldetag: 26.05.2025
(51) Int. Cl.: B62B 7/14, B62B 9/00, E05B 41/00

(54) **INDIKATOREINHEIT**

(30) Priorität: 10.06.2024 DE 102024116068
(71) Anmelder: Emmaljunga Holding AB, 28268 Vittsjö (SE)
(72) Erfinder: Edvardsson, Joakim, 28143 Hässleholm (SE); Bost, Bart Willem Jozef, 6216 PS Maastricht (NL); De Graaff, Marc Geradus Jozef, 6229 HW Maastricht (NL); Joosten, Alexander Johan Louis, 6041 MJ Roermond (NL)
(74) Vertreter: Müller Schupfner & Partner Patent- und Rechtsanwaltspartnerschaft mbB (Muc)

(57) **Zusammenfassung**

Die Erfindung betrifft eine Indikatoreinheit (1), ein Verriegelungssystem (10) mit einer Indikatoreinheit, eine Transporteinheit (20) mit zwei Verriegelungssystemen und die Verwendung einer Indikatoreinheit in einem Kinderwagen, wobei die Indikatoreinheit zur Anzeige eines verriegelten Zustandes oder zumindest eines nicht verriegelten Zustandes vorgesehen ist, aufweisend eine Referenzeinheit (2), ein erstes Indikatorelement (3) und ein zweites Indikatorelement (4), wobei das erste Indikatorelement und das zweite Indikatorelement in oder an der Referenzeinheit längs einer Einschubachse (E) oder einer, bevorzugt orthogonal zur Einschubachse stehenden Querachse (Q) relativ zur Referenzeinheit und relativ zueinander verlagerbar geführt, und gegen Verlagerung quer zur jeweiligen Einschub- oder Querachse gesichert sind, wobei am ersten Indikatorelement (3) ein erster Anzeigeabschnitt (31) und ein zweiter Anzeigeabschnitt (32) ausgebildet sind, wobei am zweiten Indikatorelement ein dritter Anzeigeabschnitt (43) ausgebildet ist, wobei die Referenzeinheit eine Öffnung (22) aufweist, durch welche hindurch einer der Anzeigeabschnitte sichtbar ist, um entweder den verriegelten Zustand oder den nicht verriegelten Zustand anzuzeigen, wobei der verriegelte Zustand angezeigt wird, wenn der zweite Anzeigeabschnitt (32) durch die Öffnung (22) hindurch sichtbar ist.

## Beschreibung

Die Erfindung bezieht sich allgemein auf eine Verriegelungsanzeige für Kindertransportfahrzeuge, insbesondere auf Sitzrahmen und Babyschalen, die mit dem Fahrgestell verriegelt werden.

Bei Kinderwagen oder ähnlichen Fahrzeugen für Kinder gibt es in der Regel ein Fahrgestell mit Rädern und eine oder mehrere Einheiten für den Transport eines Kindes (z. B. Sitzrahmen und Babyschale). Das Fahrgestell und die einzelnen Einheiten sind meist abnehmbar, um das Zusammenklappen des Kinderwagens zu erleichtern. Dies erfordert eine sichere und intuitive Fixierung dieser Einheiten durch den Benutzer, der die Einheiten bedient. In der Regel ist der Verriegelungsmechanismus selbstsichernd, wobei häufig elastische Elemente wie Federn verwendet werden, um den Verriegelungsmechanismus in einen Standardzustand, in welchem eine Verriegelung vorliegt, zu zwingen. Problematisch in diesem Zusammenhang ist es, dass eine genaue und fehlersichere Anzeige des Verriegelungszustandes nicht immer gewährleistet ist. Insbesondere kritisch ist es, wenn dem Anwender ein verriegelter Zustand angezeigt wird, obwohl eine mechanische Verriegelung tatsächlich nicht vorliegt.

Aufgabe der vorliegenden Erfindung ist die Bereitstellung eines Indikators, welcher zuverlässig einen verriegelten Zustand nur dann anzeigt, wenn tatsächlich eine mechanische Verriegelung vorliegt.

Die vorliegende Erfindung löst diese Aufgabe mit einer Indikatoreinheit nach Anspruch 1, einem Verriegelungssystem nach Anspruch 12, einer Transporteinheit nach Anspruch 14 und mit der Verwendung einer Indikatoreinheit nach Anspruch 15.

Erfindungsgemäß ist eine Indikatoreinheit zur Anzeige eines verriegelten Zustandes oder zumindest eines nicht verriegelten Zustandes vorgesehen, aufweisend eine Referenzeinheit, ein erstes Indikatorelement und ein zweites Indikatorelement, wobei das erste Indikatorelement und das zweite Indikatorelement in oder an der Referenzeinheit längs einer Einschubachse oder einer, bevorzugt orthogonal zur Einschubachse stehenden Querachse relativ zur Referenzeinheit und relativ zueinander verlagerbar geführt, und gegen Verlagerung quer zur jeweiligen Einschub- oder Querachse gesichert sind, wobei am ersten Indikatorelement ein erster Anzeigeabschnitt und ein zweiter Anzeigeabschnitt ausgebildet ist, wobei am zweiten Indikatorelement ein dritter Anzeigeabschnitt ausgebildet ist, wobei die Referenzeinheit eine Öffnung aufweist, durch welche hindurch einer der Anzeigeabschnitte sichtbar ist, um entweder den verriegelten Zustand oder den nicht verriegelten Zustand anzuzeigen, wobei der verriegelte Zustand angezeigt wird, wenn der zweite Anzeigeabschnitt durch die Öffnung hindurch sichtbar ist. Die Indikatoreinheit ist mit anderen Worten insbesondere dafür ausgelegt, einem Anwender die Information zu übermitteln, ob eine erste Komponente oder Baugruppe an einer Komponente oder Baugruppe ordnungsgemäß und sicher festgelegt ist. Hierfür ist die Indikatoreinheit insbesondere dafür ausgelegt, verschiedene Varianten von einer nicht sicheren Festlegung der erste Baugruppe an der zweiten Baugruppe zu berücksichtigen und dabei jeweils einen offenen bzw. nicht verriegelten Zustand anzuzeigen. Dabei berücksichtigt die Indikatoreinheit insbesondere, ob die erste Baugruppe längs einer Einschubachse ordnungsgemäß in die zweite Baugruppe eingeschoben ist, indem sie mit dem zweiten Indikatorelement genau diesen Einschubzustand überwacht. Weiterhin liefert die Indikatoreinheit eine Information dazu, ob die erste Baugruppe ordnungsgemäß mit der zweiten Baugruppe verriegelt und somit insbesondere gegen Verlagerung längs und/oder parallel zur Einschubachse gesichert ist. Zu diesem Zweck weist die Indikatoreinheit eine Referenzeinheit auf, welche insbesondere eine Referenzgeometrie in Form einer Öffnung bereitstellt. Die Referenzeinheit ist mit Vorteil das Gehäuse oder ein Abschnitt eines Gehäuses eines Verriegelungssystems, mit welchem die erste Baugruppe an der zweiten Baugruppe festlegbar ist. Relativ zur Referenzeinheit beweglich sind ein erstes Indikatorelement und ein zweites Indikatorelement vorgesehen, wobei das erste Indikatorelement einen ersten und einen zweiten Anzeigeabschnitt aufweist und das zweite Indikatorelement einen dritten Anzeigeabschnitt aufweist. Bevorzugt ist das zweite Indikatorelement derart angeordnet, dass es in einer bestimmten Stellung das erste Indikatorelement bereichsweise überdeckt, wobei insbesondere bevorzugt der dritte Anzeigeabschnitt des zweiten Indikatorelements entlang einer Sichtlinie durch die Öffnung der Referenzeinheit vor dem ersten oder dem zweiten Anzeigeabschnitt des ersten Indikatorelements angeordnet ist und diesen somit jeweils verdeckt. Auf diese Weise können durch die jeweilige Stellung des ersten und des zweiten Indikatorelements verschiedene Zustände am Verriegelungssystem angezeigt und auf den ersten Blick durch die Öffnung der Referenzeinheit für einen Anwender der Indikatoreinheit unmittelbar ersichtlich gemacht werden. Dies erhöht auf besonders einfache Weise die Sicherheit beim Betrieb eines entsprechenden Systems, welches insbesondere als Kindertransportsystem oder Kinderwagen ausgebildet ist und entsprechend hohe Anforderungen an die Funktionssicherheit und die sichere Festlegung einzelner Baugruppen dieses Kindertransportsystems an einander stellt. Die Einschubachse und die Querachse, entlang derer das erste Indikatorelement und/oder das zweite Indikatorelement vorzugsweise geführt oder gegen Verlagerung quer zu der jeweiligen Achse gesichert ist/sind, stehen dabei mit Vorteil quer zueinander und in einer besonders vereinfachten Ausführungsform senkrecht zueinander. Als im Wesentlichen quer zu einander stehende Ausrichtung wird ein Winkelbereich von 75-105°, welcher im Kreuzungsbereich der Achsen aufgespannt ist, angesehen.

In einer Ausführungsform definiert die Öffnung eine Sichtlinie, welche im Wesentlichen orthogonal zu einer durch den Rand der Öffnung aufgespannten Ebene steht, wobei zumindest einer der Anzeigeabschnitte derart angeordnet ist, dass er von der Sichtlinie geschnitten wird, vorzugsweise mittig geschnitten wird. Die Sichtlinie definiert insbesondere den unbeeinträchtigten Blick durch die Öffnung in der Referenzeinheit hindurch und wird vorzugsweise als Orthogonale zu einer Ebene, welche den Rand der Öffnung schneidet, definiert. Für den Fall, dass die Öffnung in einem gekrümmt ausgebildeten Bereich der Referenzeinheit vorgesehen ist, verläuft die Sichtlinie mit Vorteil koaxial zur Mittellinie der Öffnung, welche mit Vorteil als Bohrung ausgeführt ist. Wenn also die Öffnung eine zylindrische Aussparung im Material der Referenzeinheit ist, verläuft die Sichtlinie koaxial zur Zylinderachse. Für den Fall, dass eine nicht zylindrische und insbesondere polygonale Form der Öffnung vorgesehen ist, verläuft die Sichtlinie koaxial zur Zylinderachse eines mittleren, gedachten Zylinders, welcher an die Innengeometrie der Öffnung angenähert ist. Im Rahmen der vorliegenden Erfindung wird davon ausgegangen, dass, wenn die Sichtlinie den jeweiligen Anzeigeabschnitt im Wesentlichen mittig schneidet, diese am besten durch die Öffnung hindurch sichtbar ist. Weiterhin verhindert dieses Merkmal, dass Zwischenzustände zwischen zwei Anzeigeabschnitten angezeigt werden, wobei dem Anwender des Systems stets eine klare Information bezüglich der Verriegelung oder einer noch nicht vollständig vorhandenen Verriegelung übermittelt werden kann.

In einer Ausführungsform wird der verriegelte Zustand angezeigt, wenn der zweite Anzeigeabschnitt und keiner des ersten und des dritten Anzeigeabschnitts von der Sichtlinie geschnitten wird. Der verriegelte Zustand, also der Zustand, in welchem eine erste Baugruppe vollständig und sicher mit einer zweiten Baugruppe in Eingriff steht, wird durch die Indikatoreinheit insbesondere dadurch angezeigt, dass nur der zweite Anzeigeabschnitt des ersten Indikatorelements durch die Öffnung hindurch sichtbar ist und dieser nicht durch den dritten Anzeigeabschnitt verdeckt ist. Auf diese Weise gelangt der Anwender zur Gewissheit bezüglich des vollständigen Einschubs der jeweiligen Befestigungsgeometrie der ersten Baugruppe in die entsprechende Befestigungsgeometrie der zweiten Baugruppe und bezüglich einer formschlüssigen Verriegelung dieses Zustandes durch einen Verriegelungsabschnitt.

In einer Ausführungsform ist die Referenzeinheit als Gehäuse ausgeführt und weist eine erste Gehäusehälfte und vorzugsweise eine zweite Gehäusehälfte auf, wobei die Öffnung an der ersten Gehäusehälfte ausgebildet ist. Mit Vorteil ist die Referenzeinheit selbst als Gehäuse ausgeführt und weist eine erste Gehäusehälfte und eine zweite Gehäusehälfte auf, wobei die erste Gehäusehälfte vorzugsweise außen an der Baugruppe angeordnet ist und somit ein Anwender durch die an der ersten Gehäusehälfte vorgesehene Öffnung hindurch den jeweiligen Zustand der Indikatoreinheit feststellen kann. Die Funktionsintegration der Indikatoreinheit in das Gehäuse, vorzugsweise das Gehäuse eines Verriegelungssystems, sorgt für eine besonders einfache Herstellung des Gesamtsystems und reduziert die Kosten zur Bereitstellung einer Indikatoreinheit gemäß der vorliegenden Erfindung.

In einer Ausführungsform ist das erste Indikatorelement entlang der Querachse verlagerbar an der Referenzeinheit geführt angeordnet, wobei ein Verriegelungsabschnitt, welcher eine senkrecht zur Querachse wirkende Hinterschneidung aufweist, am ersten Indikatorelement ausgebildet ist, oder mit dem ersten Indikatorelement derart mechanisch gekoppelt ist, dass eine Verlagerung des Verriegelungsabschnitts eine Verlagerung des ersten Indikatorelements parallel zur Querachse bewirkt. Das erste Indikatorelement steht vorzugsweise in mechanische Verbindung oder ist unmittelbar gemeinsam mit einem Verriegelungsabschnitt ausgeführt, wobei der Verriegelungsabschnitt eine senkrecht zur Querachse und somit mit Vorteil parallel zur Einschubachse wirkende Hinterschneidung aufweist. In einer ersten Position bezogen auf die Querachse ist dabei der Verriegelungsabschnitt dafür ausgelegt, in Eingriff mit einer Haltegeometrie einer zweiten Baugruppe zu stehen, wobei diese Position des Verriegelungsabschnitts gleichzeitig eine Positionierung des ersten Indikatorelements relativ zur Referenzeinheit bewirkt und in dieser Position des Verriegelungsabschnitts der zweite Anzeigeabschnitt des ersten Indikatorelements durch die Öffnung hindurch sichtbar ist. In einer von der verriegelten Stellung abweichenden Stellung des Verriegelungsabschnitts relativ zur Querachse ist somit der erste Anzeigeabschnitt durch die Öffnung hindurch sichtbar und dem Anwender wird entsprechend ein nicht verriegelter Zustand, also ein unsicherer Zustand, angezeigt.

In einer Ausführungsform sind der erste und der zweite Anzeigeabschnitt auf der dem Verriegelungsabschnitt abgewandten Seite des ersten Indikatorelements angeordnet, wobei der Verriegelungsabschnitt parallel zur Querachse benachbart zur Hinterschneidung einen Eintrittsbereich aufweist, welcher in Einschubrichtung offen ist, wobei der erste Anzeigeabschnitt auf der Seite neben dem zweiten Anzeigeabschnitt angeordnet ist, auf der auch der Eintrittsbereich neben der Hinterschneidung angeordnet ist. Um die korrekte Anordnung der Anzeigeabschnitte am ersten Indikatorelement vorzusehen, sind diese daher bezogen auf die Querachse in derselben Reihenfolge angeordnet wie der Eintrittsbereich und die Hinterschneidung am Verriegelungsabschnitt. Der Eintrittsbereich ist dabei auf derselben Seite angeordnet wie der erste Anzeigeabschnitt und die Hinterschneidung ist somit auf derselben Seite bezogen auf die Querachse angeordnet wie der zweite Anzeigeabschnitt.

In einer Ausführungsform weisen der erste Anzeigeabschnitt und der dritte Anzeigeabschnitt eine Warnfarbe auf, wobei der zweite Anzeigeabschnitt eine Bestätigungsfarbe, vorzugsweise grün, aufweist. Als Warnfarbe, also Farbe, welche der erste und der dritte Anzeigeabschnitt aufweisen, wird insbesondere die Farbe rot oder orange verwendet, welche landläufig eine Warnung zu einem nicht gesicherten Zustand für einen Anwender signalisiert. Als Bestätigungsfarbe im vorliegenden Zusammenhang wird entsprechend ein Grünton oder auch ein Blauton verwendet, welcher jeweils eine ordnungsgemäße Verriegelung und einen funktionsbereiten Zustand des Fahrzeuges signalisiert.

In einer Ausführungsform ist das zweite Indikatorelement an dem ersten Indikatorelement und/oder an der Referenzeinheit geführt angeordnet und gegen Verlagerung quer zur Einschubachse oder quer zur Querachse gesichert, wobei das zweite Indikatorelement einen Betätigungsabschnitt aufweist, welcher zur Aufnahme einer Verlagerungskraft parallel zur Einschubrichtung oder parallel zur Querrichtung an das zweite Indikatorelement angeordnet und ausgebildet ist, wobei in einer ersten Stellung des zweiten Indikatorelements der dritte Anzeigeabschnitt von der Sichtlinie geschnitten wird und in einer zweiten Stellung des zweiten Indikatorelements eine am zweiten Indikatorelement vorgesehene Aussparung von der Sichtlinie geschnitten wird. Das zweite Indikatorelement ist somit mit Vorteil nicht unmittelbar mit dem Verriegelungsabschnitt mechanisch verbunden, sondern kann sich entlang der Einschubachse und/oder entlang der Querachse relativ zum ersten Indikatorelement und relativ zur Referenzeinheit verlagern und ist in den anderen Richtungen jeweils gegen Verlagerungen gesichert und geführt. Dabei weist das zweite Indikatorelement einen Betätigungsabschnitt auf, welcher zur Aufnahme einer entsprechenden Verlagerungskraft anders Indikatorelement ausgebildet ist, wobei diese Verlagerungskraft insbesondere durch das korrekte Einschieben des entsprechenden Befestigungsabschnitts der ersten Baugruppe in einem entsprechenden Aufnahmeabschnitts der zweiten Baugruppe, wie zuvor beschrieben, verursacht ist. Auf diese Weise liefert das zweite Indikatorelement einer Information zum Einschubzustand. Ist noch nicht der vollständige Einschub in die entsprechende Befestigungs- und Aufnahmegeometrie erfolgt, befindet sich dabei vorzugsweise das zweite Indikatorelement in einer ersten Stellung, in welcher der dritte Anzeigeabschnitt von der Sichtlinie der Referenzeinheit geschnitten wird. Erst nach dem vollständigen Einschub der Befestigungsgeometrie der erste Baugruppe in die Aufnahmegeometrie der zweiten Baugruppe ist vorzugsweise das zweite Indikatorelement in einer zweiten Stellung angeordnet, in welcher eine vorzugsweise vorgesehene Aussparung des zweiten Indikatorelements von der Sichtlinie geschnitten wird und somit den freien Blick auf den jeweiligen Anzeigeabschnitt des ersten Indikatorelements zulässt. Der Verriegelungsabschnitt ist mit Vorteil in Richtung des Einsatzbereiches mit einer Kraft vorgespannt, sodass beim Einschub und Überwinden dieser Vorspannung des Verriegelungsabschnitts automatisch ein Eingriff zwischen einer entsprechenden Haltegeometrie an der zweiten Baugruppe und der Hinterschneidung des Verriegelungsabschnitts erreicht wird. Mit Vorteil ist somit auch das Indikatorelement in einer Stellung vorgespannt, in welcher der zweite Anzeigeabschnitt von der Sichtlinie geschnitten wird.

In einer Ausführungsform ist der Betätigungsabschnitt als Aussparung mit einer Transformationsgeometrie ausgeführt, welcher mit einem Betätigungselement in formschlüssigem Eingriff steht, wobei eine Verlagerung des Betätigungselements parallel zur Einschubachse durch den formschlüssigen Eingriff mit der Transformationsgeometrie eine Verlagerung des zweiten Indikatorelements parallel zur Querachse bewirkt. In dieser Ausführungsform ist somit ein weiteres, relativ zum ersten und zum zweiten Indikatorelement sowie zur Referenzeinheit verlagerbares Betätigungselement vorgesehen, welches eine Verlagerungsbewegung parallel zur Einschubachse durchführt, um den entsprechenden Einschubzustand an das zweite Indikatorelement zu übermitteln. Das zweite Indikatorelement weist eine Transformationsgeometrie, insbesondere eine Aussparung, welche im entsprechenden formschlüssigen Eingriff mit einer Betätigungsgeometrie des Betätigungselements steht, auf, welche eine Verlagerung des Betätigungselements in eine Verlagerung des zweiten Indikatorelements parallel zur Querachse wandelt.

In einer alternativen Ausführungsform ist der Betätigungsabschnitt als Vorsprung an dem dem dritten Anzeigeabschnitt gegenüberliegenden distalen Ende des zweiten Indikatorelements ausgebildet und ausgelegt, eine Kraft entlang der Einschubachse aufzunehmen, wobei die Aussparung zwischen dem dritten Anzeigeabschnitt und dem Betätigungsabschnitt angeordnet ist. In dieser vereinfachten Ausführungsform, wird das zweite Indikatorelement direkt mit der entsprechenden Verlagerungskraft beaufschlagt und verlagert sich vorzugsweise parallel zur Einschubachse, wobei weniger Bauteile in der Indikatoreinheit benötigt werden.

In einer Ausführungsform wird ein erster nicht verriegelter Zustand angezeigt, wenn der zweite Anzeigeabschnitt und der dritte Anzeigeabschnitt von der Sichtlinie geschnitten werden, wobei der dritte Anzeigeabschnitt den zweiten Anzeigeabschnitt verdeckt, wobei ein zweiter nicht verriegelter Zustand angezeigt wird, wenn der erste Anzeigeabschnitt und der dritte Anzeigeabschnitt von der Sichtlinie geschnitten werden, wobei ein dritter nicht verriegelter Zustand angezeigt wird, wenn der erste Anzeigeabschnitt und keiner des zweiten und des dritten Anzeigeabschnitts von der Sichtlinie geschnitten wird. Die Anordnung des ersten Indikatorelements und des zweiten Indikatorelements relativ zueinander und relativ zur Öffnung der Referenzeinheit erlaubt somit eine Vielzahl verschiedener nicht verriegelter Zustände anzuzeigen. Ein erster nicht verriegelter Zustand ist dadurch gekennzeichnet, dass noch nicht der korrekte Einschub der Befestigungsgeometrie der ersten Baugruppe in die Aufnahmegeometrie der zweiten Baugruppe vorhanden ist, aber gleichzeitig der Verriegelungsabschnitt sich bereits in seiner verriegelnden Stellung befindet. Um diese Anordnung des Verriegelungsabschnitts nicht misszuverstehen, und deutlich zu machen, dass noch keine Verriegelung der Baugruppen aneinander vorliegt, zeigt die Indikatoreinheit einen nicht verriegelten Zustand an, da der mit einer Warnfarbe vorgesehene dritte Anzeigeabschnitt durch die Öffnung hindurch sichtbar ist. Ein zweiter nicht verriegelter Zustand ist dadurch gekennzeichnet, dass weder ein vollständiger Einschub vorhanden ist noch der Verriegelungsabschnitt sich in seiner verriegelten Stellung befindet. Dieser Zustand könnte beispielsweise durch ein Verklemmen der Eingriffsgeometrie zwischen der ersten Baugruppe und der zweiten Baugruppe ausgelöst werden, bei welchem keine vollständige Verriegelung vorliegt, und die Baugruppen dennoch aufgrund eines verklemmten Zustandes mehr oder weniger aneinander festgelegt sind. In diesem zweiten nicht verriegelten Zustand ist somit der dritte Anzeigeabschnitt durch die Öffnung hindurch sichtbar, welcher aber auch den erste Anzeigeabschnitt zumindest bereichsweise überdeckt, sodass in Summe eine Warnfarbe durch die Öffnung hindurch sichtbar ist. Ein dritter nicht verriegelter Zustand liegt vor, wenn der Befestigungsbereichs der ersten Baugruppe zwar vollständig in den Aufnahmebereich der zweiten Baugruppe eingeschoben ist, aber, möglicherweise aufgrund einer temporären Verklemmung, der Verriegelungsabschnitt noch nicht in vollständigen Eingriff mit der entsprechenden Haltegeometrie der zweiten Baugruppe steht. In dieser Stellung wird zwar nicht der dritte Anzeigeabschnitt von der Sichtlinie geschnitten, es ist aber durch die Öffnung hindurch der erste Anzeigeabschnitt, welcher ebenfalls eine Warnfarbe aufweist, sichtbar.

Erfindungsgemäß ist weiterhin ein Verriegelungssystem vorgesehen, umfassend eine mobile Einheit und eine Rahmeneinheit, wobei die mobile Einheit eine Indikatoreinheit mit den zuvor beschriebenen Merkmalen aufweist, wobei die Rahmeneinheit eine Aufnahmegeometrie zur Aufnahme und Führung eines Eingriffsteils der mobilen Einheit entlang der Einschubachse aufweist, wobei die Rahmeneinheit einen Halteabschnitt aufweist, welcher zum formschlüssigen Eingriff mit dem Verriegelungsabschnitt der Indikatoreinheit ausgelegt und vorgesehen ist, um die mobile Einheit gegen Verlagerung längs der Einschubachse relativ zur Rahmeneinheit zu sichern, wobei die Indikatoreinheit den Verriegelungszustand nur dann anzeigt, wenn der Eingriffsteil vollständig in die Aufnahmegeometrie eingeschoben ist und der Verriegelungsabschnitt im formschlüssigen Eingriff mit dem Halteabschnitt steht. Das Verriegelungssystem umfasst neben der Indikatoreinheit Teilkomponenten einer mobilen Einheit und eine Rahmeneinheit. Die mobile Einheit ist dabei vorzugsweise an einem Transportgerät oder einer Transporteinheit, welche von einem Rahmen abnehmbar ist, festgelegt. Die Rahmeneinheit ist mit Vorteil die entsprechende Aufnahme oder Befestigungsgeometrie welcher an einem Rahmen, beispielsweise am Rahmen eines Kinderwagens, vorgesehen ist. Die Rahmeneinheit weist dabei eine Aufnahmegeometrie auf, welche insbesondere als Aufnahmeaussparung ausgebildet ist. Innerhalb der Aufnahmegeometrie ist dabei mit Vorteil ein Halteabschnitt ausgebildet, welcher aus widerstandsfähigem Material, wie hartem Kunststoff oder Metall, hergestellt ist und insbesondere eine formschlüssige Festlegung durch einen formschlüssigen Eingriff mit dem Verriegelungsabschnitt erlaubt. Die mobile Einheit weist einen Eingriffsteil auf welcher insbesondere zum Einschieben in die Aufnahmegeometrie ausgelegt ist. Aufnahmegeometrie und Eingriffsteil sind dabei mit Vorteil als Stecker und Steckeraufnahme zu verstehen. Der Halteabschnitt der Rahmeneinheit ist vorzugsweise als zylindrischer Bolzen oder Pin ausgelegt welcher insbesondere zum Eingriff mit einer spaltförmigen Hinterschneidung am Verriegelungsabschnitts ausgebildet ist.

In einer Ausführungsform weist die mobile Einheit einen Handgriff auf, welcher mit dem Verriegelungsabschnitt derart gekoppelt ist, dass eine Verlagerung des Handgriffs durch einen Anwender eine Verlagerung des Verriegelungsabschnitts und des ersten Indikatorelements bewirkt. Der Handgriff ist insbesondere dafür vorgesehen, die Verbindung zwischen der Rahmeneinheit und der mobilen Einheit zu lösen. Dabei wird durch eine Betätigung des Handgriffs vorzugsweise der in Richtung seines formschlüssigen Eingriffs vorgespannte Verriegelungsabschnitt in seine gelöste Stellung verlagert, wodurch der formschlüssigen Eingriff zwischen dem Verriegelungsabschnitt und dem Halteabschnitt der Rahmeneinheit gelöst wird. Der Handgriff ist somit vorzugsweise mechanisch mit dem ersten Indikatorelement und dem Verriegelungsabschnitt gekoppelt. In einer alternativen Ausführungsform kann die mechanische Vorspannung des Verriegelungsabschnitts in seine verriegelte Stellung auch durch eine Vorspannung des Handgriffs erreicht werden, welche durch die mechanische Kopplung des Handgriffs mit dem Verriegelungsabschnitt indirekt an den Verriegelungsabschnitt übertragen wird.

Weiterhin ist erfindungsgemäß eine Transporteinheit, insbesondere zum Einsatz in einem Kinderwagen, vorgesehen, aufweisend zwei voneinander beabstandete Verriegelungssysteme mit den zuvor beschriebenen Merkmalen, wobei zwischen den Verriegelungssystemen ein Grundabschnitt zur Ausbildung oder Festlegung eines Transportbereiches vorgesehen ist. Die Transporteinheit ist in einer ersten bevorzugten Ausführungsform als Babyschale eines Kinderwagens ausgeführt. In einer alternativen ebenfalls bevorzugten Ausführungsform ist die Transporteinheit ein Kindersitz, insbesondere ein klappbarer Sportsitz eines Kinderwagens. An beiden Seiten der Transporteinheit ist entsprechend je ein Verriegelungssystem angeordnet, welches eine Indikatoreinheit aufweist. Dabei kann in einer besonders bevorzugten Ausführungsform ein zentraler Handgriff vorgesehen sein welcher beide Verriegelungssysteme betätigt. Alternativ hierzu sind zwei Handgriffe, je einer an jedem der Verriegelungssysteme, vorgesehen.

Schließlich ist erfindungsgemäß die Verwendung einer Indikatoreinheit in einer Transporteinheit eines Kinderwagens vorgesehen. Die Verwendung der Indikatoreinheit gemäß der vorliegenden Erfindung in einem Kinderwagen ist insbesondere vorteilhaft, da besonders hohe Sicherheitsanforderungen an Kinderwagen gestellt werden und die Indikatoreinheit in diesem technischen Anwendungsgebiet einen besonders hohen Nutzen aufweist. Gleichzeitig löst die Indikatoreinheit dabei das Problem, dass an Kinderwägen möglichst wenig komplexe Systeme, die eine fehlersichere Anzeige eines entsprechenden Verriegelungszustandes ermöglichen, verwendet werden müssen. Zum einen verringert dies die Fehleranfälligkeit und zum anderen reduziert dies die Kosten zur Herstellung einer Transporteinheit eines Kinderwagens mit entsprechender Indikatoreinheit.

Weitere Vorteile und charakteristische Eigenschaften der vorliegenden Erfindung ergeben sich aus der nachfolgenden Beschreibung mit Bezug auf die beigefügten Figuren. Gleiche Merkmale werden in den Figuren jeweils mit gleichen Bezugszeichen verwendet, auch wenn sie Teil unterschiedlicher Ausführungsformen sind. Es versteht sich dabei, dass einzelne Merkmale, welche nur für eine bestimmte Ausführungsform explizit beschrieben werden, auch in anderen Ausführungsformen der Erfindung zum Einsatz gelangen können sollen, sofern sich dies nicht aufgrund technischer Gegebenheiten verbietet.

Es zeigen:
- Fig. 1: eine perspektivische Ansicht einer Ausführungsform eines Teils einer Transporteinheit;
- Fig. 2: eine Detailansicht des Seitenbereiches der Transporteinheit gemäß Fig. 1;
- Fig. 3: eine Explosionsansicht einer ersten bevorzugten Ausführungsform einer Indikatoreinheit;
- Fig. 4 bis 6: perspektivische Ansichten des entsprechenden Innenlebens der ersten bevorzugten Ausführungsform einer Indikatoreinheit in verschiedenen Zuständen;
- Fig. 7: eine Explosionsansicht einer 2. bevorzugten Ausführungsform einer Indikatoreinheit; und
- Fig. 8 bis 11: Ansichten des entsprechenden Innenlebens der zweiten Ausführungsform der Indikatoreinheit in verschiedenen Zuständen.

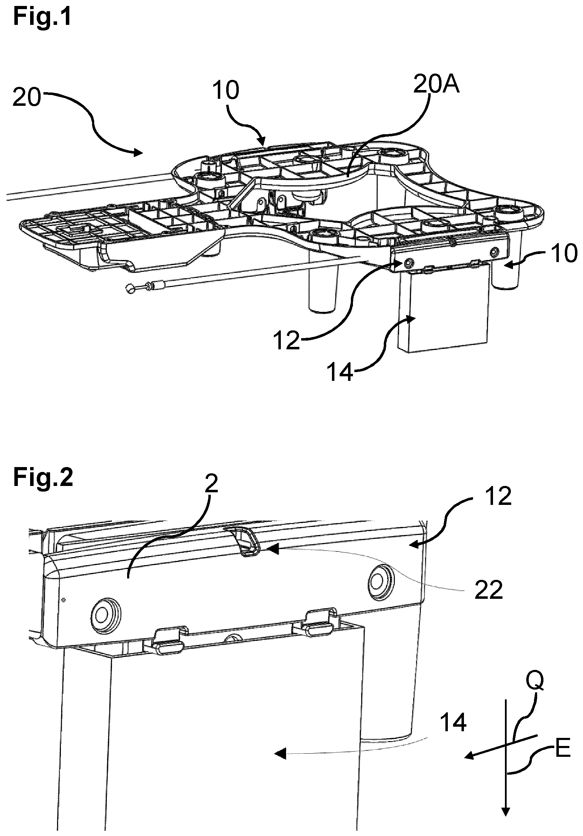

Die in Figur 1 gezeigte Transporteinheit 20 ist in einer bevorzugten Ausführungsform der Unterteil einer Babyschale eines Kinderwagens und weist einen Grundabschnitt 20A auf, an dessen Seiten jeweils ein Verriegelungssystem 10 angeordnet ist. Die mobile Einheit 12 des Verriegelungssystems 10 ist dabei jeweils an dem Grundabschnitt 20A festgelegt und ist zum Eingriff in jeweils eine Rahmeneinheit 14 vorgesehen. Die Rahmeneinheit 14 ist dabei mit Vorteil eine fest am Rahmen des Kinderwagens festgelegte Aufnahmegeometrie, welche eine formschlüssige Aufnahme und Verriegelung der mobilen Einheit 12 erlaubt.

Wie in Figur 2 dargestellt, wird die mobile Einheit 12 vorzugsweise längs der Einschubrichtung E in die Rahmeneinheit 14 eingeschoben und in der vollständig eingeschobenen Stellung mittels eines in dieser Figur nicht gezeigten Verriegelungsabschnitts 5 formschlüssig gegen Verlagerung längs zur Einschubachse E gesichert. Die an der mobilen Einheit 12 vorgesehene Referenzgeometrie 2 weist eine Öffnung 22 auf, durch welche hindurch der Verriegelungszustand V oder nicht verriegelte Zustand O abgelesen werden kann.

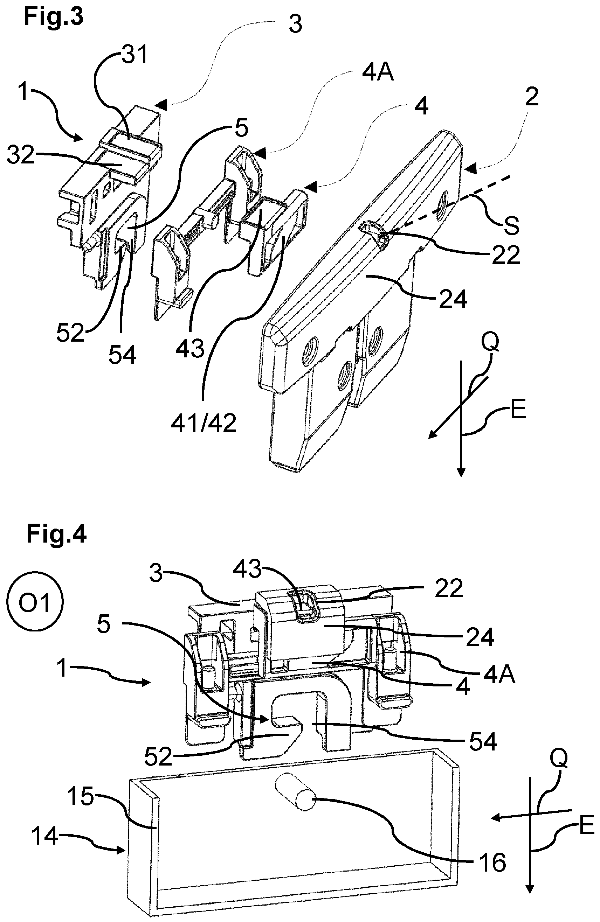

Figur 3 zeigt eine Explosionsansicht der bereits in Figur 2 gezeigten Ausführungsform der Indikatoreinheit 1, welche vorzugsweise Teil der mobilen Einheit 12 gemäß Figur 2 ist. Die Indikatoreinheit weist eine Referenzeinheit 2 auf, welche im vorliegenden Beispiel Teil eines Gehäuses ist und eine erste Gehäusehälfte 24 aufweist, wobei in der Referenzeinheit 2 eine Öffnung 22 vorgesehen ist, welche eine Sichtlinie S definiert. Innerhalb der Referenzeinheit 2 ist ein erstes Indikatorelement 3, ein zweites Indikatorelement 4, sowie ein Betätigungselement 4A vorgesehen. Das erste Indikatorelement 3 weist einen ersten Anzeigeabschnitt 31 und benachbart zu diesem und parallel zur Querachse Q neben diesem angeordnet, einen zweiten Anzeigeabschnitt 32 auf. Einstückig am ersten Indikatorelement 3 ausgebildet ist ein Verriegelungsabschnitt 5 mit einer Hinterschneidung 52 und einem Eintrittsbereich 54. Der erste Anzeigeabschnitt 31 ist dabei vorzugsweise auf derselben Seite neben dem zweiten Anzeigeabschnitt 32 angeordnet wie der Eintrittsbereich 54 neben der Hinterschneidung 52. Das zweite Indikatorelement 4 weist einen Betätigungsabschnitt 41 auf, welcher als Transformationsgeometrie 42 ausgebildet ist. Die Transformationsgeometrie 42 ist zum Eingriff mit dem am Betätigungselement 4A ausgebildeten, zylindrischen Vorsprung ausgebildet und vorgesehen und wandelt eine Verlagerung des Betätigungselements 4A parallel zur Einschubrichtung E in eine Verlagerungsbewegung des zweiten Indikatorelements 4 parallel zur Querrichtung Q um. Das Betätigungselement 4A ist an seiner Unterseite vorzugsweise mit 2 Stützabschnitten ausgestattet, welcher zur Abstützung an der Aufnahmegeometrie 15 der Rahmeneinheit 14 ausgelegt sind. Auf diese Weise wird beim Einführen der mobilen Einheit 12 in die Rahmeneinheit 14 das Betätigungselement 4A relativ zur Referenzeinheit 2 nach oben, parallel zur Einschubachse E, verlagert, was wiederum einer Verlagerungsbewegung des zweiten Indikatorelements 4 parallel zur Querrichtung verursacht. In der bevorzugten Ausführungsform gemäß Figur 3 wird dabei das zweite Indikatorelement 4 nach links verlagert, wodurch anstelle des dritten Anzeigeabschnitts 43 nun der rechts neben dem dritten Anzeigeabschnitt 43 angeordnete, ausgesparte Bereich von der Sichtlinie S geschnitten wird. Auf diese Weise wird nach dem vollständigen Einschieben der mobilen Einheit 12 in die Rahmeneinheit 14 der Blick auf einen der Anzeigeabschnitte 31,32 des ersten Indikatorelements 3 freigegeben.

Figur 4 zeigt einen ersten nicht verriegelten Zustand O1 der Ausführungsform der Indikatoreinheit 1 gemäß Figur 3, wobei die mobile Einheit 12 nicht in die Rahmeneinheit 14 eingeschoben ist und in der Öffnung 22 entsprechend nur der dritte Anzeigeabschnitt 43 sichtbar ist. Hinter dem dritten Anzeigeabschnitt 43 ist, da sich der Verriegelungsabschnitt 5 in seiner verriegelten Position befindet, der zweite Anzeigeabschnitt 32 angeordnet, welcher jedoch vom dritten Anzeigeabschnitt 43 verdeckt ist.

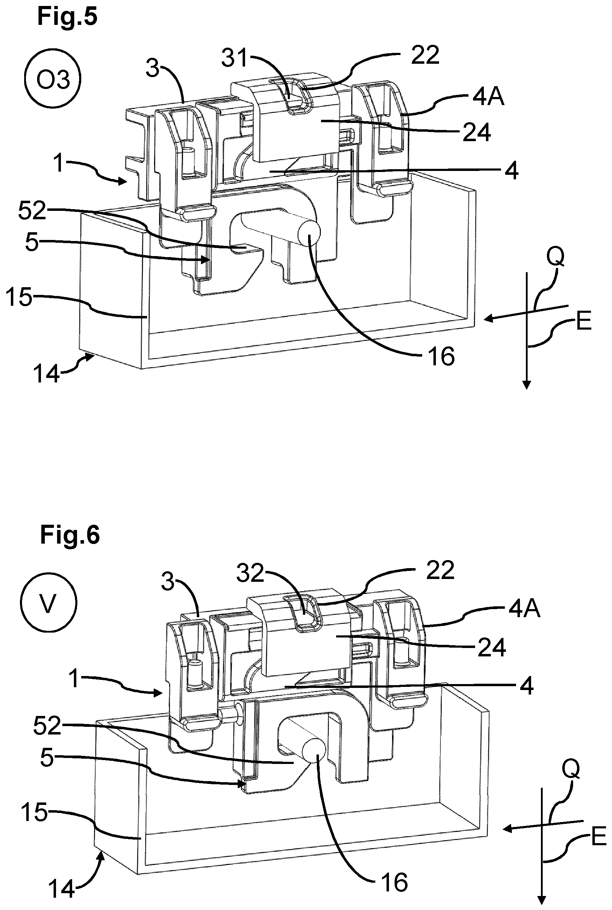

Figur 5 zeigt den dritten nicht verriegelten Zustand O3 der Indikatoreinheit 1, wobei die mobile Einheit 12 zwar vollständig in die Rahmeneinheit 14 eingeschoben ist, aber der Verriegelungsabschnitt 5 sich nicht in seiner verriegelten Stellung, sondern nach links verschoben in seiner entriegelten Stellung befindet. Das zweite Indikatorelement 4 ist aufgrund des vollständigen Einschubs in die Rahmeneinheit 14 nach links verlagert und der Blick auf den ersten Anzeigeabschnitt 31 ist nicht durch den dritten Anzeigeabschnitt 43 verdeckt. Dennoch zeigt die Indikatoreinheit einen nicht verriegelten Zustand an, da durch die Öffnung 22 der erste Anzeigeabschnitt 31, welcher mit einer Warnfarbe wie zum Beispiel rot ausgelegt ist, sichtbar ist. In diesem Zustand könnte die mobile Einheit 12 somit ohne Widerstand wieder aus der Rahmeneinheit 14 herausgezogen werden, was gegebenenfalls eine Gefahr darstellt.

Figur 6 schließlich zeigt den verriegelten Zustand V der Indikatoreinheit 1, bei welcher sowohl der vollständige Einschub der mobilen Einheit 12 in der Rahmeneinheit 14 vorliegt als auch die Verriegelung durch den Eingriff der Hinterschneidung 52 mit dem Halteabschnitt 16. Entsprechend ist durch die Öffnung 22 hindurch der zweite Anzeigeabschnitt 32 des ersten Indikatorelements 3 sichtbar und dem Anwender wird der sicher verriegelte Zustand des Systems angezeigt.

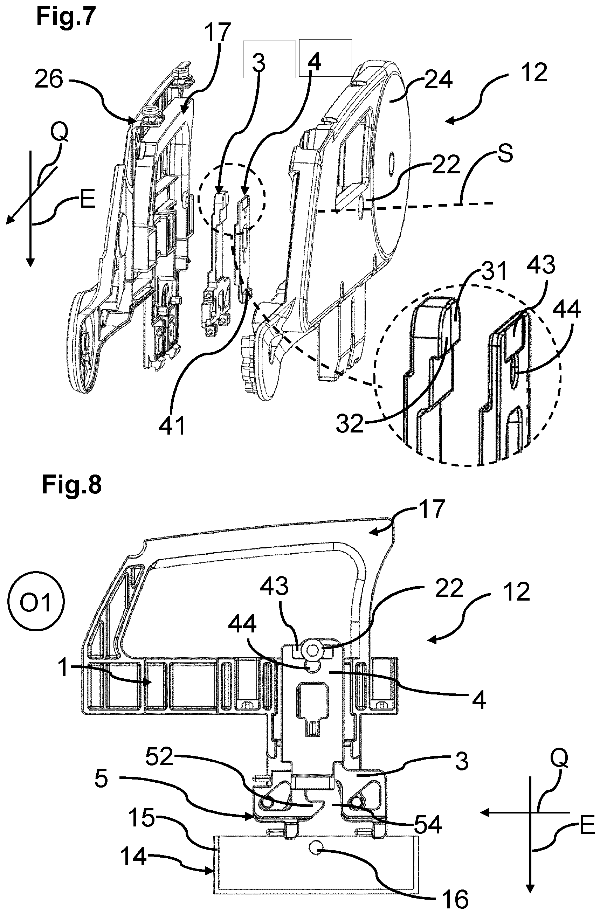

Figur 7 zeigt eine weitere bevorzugte Ausführungsform einer Indikatoreinheit 1 in Explosionsansicht. Diese Ausführungsform der Indikatoreinheit 1 ist insbesondere zum Einsatz an einem Sportsitz eines Kinderwagens geeignet. Die Referenzeinheit 2 ist vorzugsweise Teil eines Gehäuses mit einer ersten Gehäusehälfte 24 und einer zweiten Gehäusehälfte 26. In der ersten Gehäusehälfte 24 ist dabei die Öffnung 22 vorgesehen und definiert eine Sichtlinie S entlang der Zylinderachse der zylindrischen Aussparung, welche die Öffnung 22 bildet. Die Indikatoreinheit 1 gemäß dieser Ausführungsform ist Teil einer mobilen Einheit 12 und weist wiederum ein erstes Indikatorelement 3 und ein zweites Indikatorelement 4 auf, wobei in der Detailansicht die Anordnung der Anzeigeabschnitte 31,32 und 43 sowie der Anzeigeaussparung 44 gezeigt sind. In dieser Ausführungsform wird auf ein Betätigungselement 4A gemäß der zuvor beschriebenen Ausführungsform verzichtet und das zweite Indikatorelement 4 führt eine vertikale Bewegung parallel zur Eingriffsachse E aus, wobei die Sichtachse S jeweils entweder den dritten Anzeigeabschnitt 43 oder die Anzeigeaussparung 44 schneidet. Weiterhin weist diese Ausführungsform der mobilen Einheit 12 neben der Indikatoreinheit 1 noch einen Handgriff 17 auf, welcher mechanisch mit dem ersten Indikatorelement 3 gekoppelt ist, derart dass eine Verlagerung des Handgriffs 17 das Verlagern des ersten Indikatorelements 3 mit vorzugsweise daran ausgebildetem Verriegelungsabschnitt 5 parallel zur Querachse verursacht, wodurch der Verriegelungsabschnitt 5 in seine entriegelte Stellung gelangt.

Figur 8 zeigt einen ersten nicht verriegelten Zustand O1 der Indikatoreinheit 1, wobei die mobile Einheit 12 außerhalb der Rahmeneinheit 14 angeordnet ist und der Verriegelungsabschnitt 5 sich in seiner verriegelten Stellung befindet. In diesem Zustand ist durch die Öffnung 22 nur der dritte Anzeigeabschnitt 43 erkennbar.

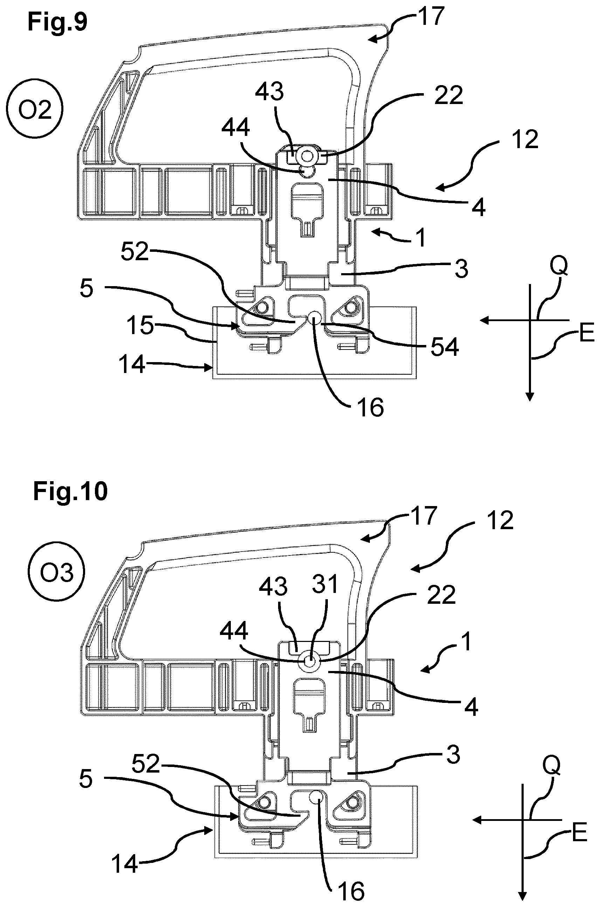

Figur 9 zeigt einen zweiten nicht verriegelten Zustand O2, wobei die mobile Einheit 12 zum einen nicht vollständig in die Rahmeneinheit 14 eingeschoben ist und zum anderen der Verriegelungsabschnitt 5 sich in seiner entriegelten Stellung befindet, also in der Figur insbesondere links verschoben angeordnet ist. In diesem zweiten nicht verriegelten Zustand O2, welcher insbesondere während des Einführvorgangs der mobilen Einheit 12 in die Rahmeneinheit 14 auftreten kann, ist durch die Öffnung 22 ebenfalls der dritte Anzeigeabschnitt 43 erkennbar, wobei dieser in diesem Fall den ersten Anzeigeabschnitt 31 verdeckt.

Figur 10 zeigt einen dritten nicht verriegelten Zustand O3, wobei die mobile Einheit 12 zwar vollständig in die Rahmeneinheit 14 eingeschoben ist, der Verriegelungsabschnitt 5 aber noch nicht im vollständigen formschlüssigen Eingriff mit dem Halteabschnitt 16 steht. In diesem nicht verriegelten Zustand O3 ist das zweite Indikatorelement 4 längs der Einschubachse E nach oben verschoben und durch die Anzeigeaussparung 44 ist das erste Indikatorelement 3 sichtbar. Da aber der Verriegelungsabschnitt 5 gemeinsam mit dem ersten Indikatorelement 3 nach in der Figur links verlagert ist, ist durch die Öffnung 22 hindurch der erste Anzeigeabschnitt 31 sichtbar, welcher mit seiner Warnfarbe wiederum einen nicht verriegelten Zustand signalisiert.

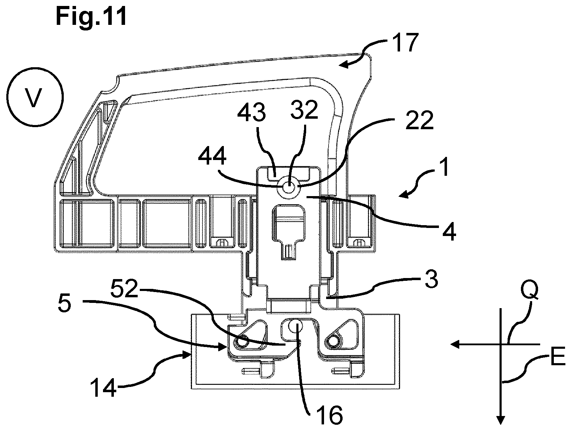

Figur 11 schließlich zeigt den verriegelten Zustand V der zweiten Ausführungsform, in welchem die mobile Einheit 12 zum einen vollständig in die Rahmeneinheit 14 eingeschoben ist und zum anderen der Verriegelungsabschnitt 5 derart angeordnet ist, dass ein formschlüssiger Eingriff zwischen der Hinterschneidung 52 und dem Halteabschnitt 16 ein Herausziehen der mobilen Einheit 12 aus der Rahmeneinheit 14 verhindert. In diesem verriegelten Zustand V ist durch die Öffnung hindurch nur der zweite Anzeigeabschnitt 32 des ersten Indikatorelements 3 sichtbar.

### Bezugszeichenliste:

- 1 -: Indikatoreinheit
- 2 -: Referenzeinheit
- 3 -: erstes Indikatorelement
- 4 -: zweites Indikatorelement
- 4A -: Betätigungselement
- 5 -: Verriegelungsabschnitt
- 10 -: Verriegelungssystem
- 12 -: mobile Einheit
- 13 -: Eingriffsteil
- 14 -: Rahmeneinheit
- 15 -: Aufnahmegeometrie
- 16 -: Halteabschnitt
- 17 -: Handgriff
- 20 -: Transporteinheit
- 20A -: Grundabschnitt
- 22 -: Öffnung
- 24 -: erste Gehäusehälfte
- 26 -: zweite Gehäusehälfte
- 31 -: erster Anzeigeabschnitt
- 32 -: zweiter Anzeigeabschnitt
- 41 -: Betätigungsabschnitt
- 42 -: Transformationsgeometrie
- 43 -: dritter Anzeigeabschnitt
- 44 -: Anzeigeaussparung
- 52 -: Hinterschneidung
- 54 -: Eintrittsbereich
- E -: Einschubachse
- O -: nicht verriegelter Zustand
- O1 -: erster nicht verriegelter Zustand
- O2 -: zweiter nicht verriegelter Zustand
- O3 -: dritter nicht verriegelter Zustand
- Q -: Querachse
- S -: Sichtlinie
- V -: Verriegelungszustand

## Patentansprüche

1. Indikatoreinheit (1) zur Anzeige eines verriegelten Zustandes (V) oder zumindest eines nicht verriegelten Zustandes (O),
aufweisend eine Referenzeinheit (2), ein erstes Indikatorelement (3) und ein zweites Indikatorelement (4),
wobei das erste Indikatorelement (3) und das zweite Indikatorelement (4) in oder an der Referenzeinheit (2) längs einer Einschubachse (E) oder einer , bevorzugt orthogonal zur Einschubachse (E) stehenden Querachse (Q) relativ zur Referenzeinheit (2) und relativ zueinander verlagerbar geführt, und gegen Verlagerung quer zur jeweiligen Einschub- oder Querachse (E, Q) gesichert sind,
wobei am ersten Indikatorelement (3) ein erster Anzeigeabschnitt (31) und ein zweiter Anzeigeabschnitt (32) ausgebildet sind,
wobei am zweiten Indikatorelement (4) ein dritter Anzeigeabschnitt (43) ausgebildet ist,
wobei die Referenzeinheit (2) eine Öffnung (22) aufweist, durch welche hindurch einer der Anzeigeabschnitte (31, 32, 43) sichtbar ist, um entweder den verriegelten Zustand (V) oder den nicht verriegelten Zustand (O) anzuzeigen, wobei der verriegelte Zustand (V) angezeigt wird, wenn der zweite Anzeigeabschnitt (32) durch die Öffnung (22) hindurch sichtbar ist.

2. Indikatoreinheit (1) nach Anspruch 1,
wobei die Öffnung (22) eine Sichtlinie (S) definiert, welche im Wesentlichen orthogonal zu einer durch den Rand der Öffnung (22) aufgespannten Ebene steht,
wobei zumindest einer der Anzeigeabschnitte (31, 32, 43) derart angeordnet ist, dass er von der Sichtlinie (S) geschnitten wird, vorzugsweise mittig geschnitten wird.

3. Indikatoreinheit (1) nach Anspruch 2,
wobei der verriegelte Zustand (V) angezeigt wird, wenn der zweite Anzeigeabschnitt (32) und keiner des ersten und des dritten Anzeigeabschnitts (31, 43) von der Sichtlinie (S) geschnitten wird.

4. Indikatoreinheit (1) nach einem der vorhergehenden Ansprüche,
wobei die Referenzeinheit (2) als Gehäuse ausgeführt ist und eine erste Gehäusehälfte (24) und vorzugswiese eine zweite Gehäusehälfte (26) aufweist, wobei die Öffnung (22) an der ersten Gehäusehälfte (24) ausgebildet ist.

5. Indikatoreinheit (1) nach einem der vorhergehenden Ansprüche,
wobei das erste Indikatorelement (3) entlang der Querachse (Q) verlagerbar an der Referenzeinheit (2) geführt angeordnet ist,
wobei ein Verriegelungsabschnitt (5), welcher eine senkrecht zur Querachse (Q) wirkende Hinterschneidung (52) aufweist, am ersten Indikatorelement (3) ausgebildet ist, oder mit dem ersten Indikatorelement (3) derart mechanisch gekoppelt ist, dass eine Verlagerung des Verriegelungsabschnitts (5) eine Verlagerung des ersten Indikatorelements (3) parallel zur Querachse (Q) bewirkt.

6. Indikatoreinheit (1) nach Anspruch 5,
wobei der erste und der zweite Anzeigeabschnitt (31, 32) auf der dem Verriegelungsabschnitt (5) abgewandten Seite des ersten Indikatorelements (3) angeordnet sind,
wobei der Verriegelungsabschnitt (5) parallel zur Querachse (Q) benachbart zur Hinterschneidung (52) einen Eintrittsbereich (54) aufweist, welcher in Einschubrichtung (E) offen ist,
wobei der erste Anzeigeabschnitt (31) auf der Seite neben dem zweiten Anzeigeabschnitt (32) angeordnet ist, auf der auch der Eintrittsbereich (54) neben der Hinterschneidung (52) angeordnet ist.

7. Indikatoreinheit nach einem der vorhergehenden Ansprüche,
wobei der erste Anzeigeabschnitt (31) und der dritte Anzeigeabschnitt (43) eine Warnfarbe aufweisen und wobei der zweite Anzeigeabschnitt (32) eine Bestätigungsfarbe, vorzugsweise grün, aufweist.

8. Indikatoreinheit (1) nach einem der Ansprüche 2 bis 7,
wobei das zweite Indikatorelement (4) an dem ersten Indikatorelement (3) und/oder an der Referenzeinheit (2) geführt angeordnet ist und gegen Verlagerung quer zur Einschubachse (E) oder quer zur Querachse (Q) gesichert ist,
wobei das zweite Indikatorelement (4) einen Betätigungsabschnitt (41) aufweist, welcher zur Aufnahme einer Verlagerungskraft parallel zur Einschubrichtung (E) oder parallel zur Querrichtung (Q) an das zweite Indikatorelement (4) angeordnet und ausgebildet ist,
wobei in einer ersten Stellung des zweiten Indikatorelements (4) der dritte Anzeigeabschnitt (43) von der Sichtlinie (S) geschnitten wird und in einer zweiten Stellung des zweiten Indikatorelements (4) eine am zweiten Indikatorelement (4) vorgesehene Aussparung (44) von der Sichtlinie (S) geschnitten wird.

9. Indikatoreinheit (1) nach Anspruch 8,
wobei der Betätigungsabschnitt (41) als Aussparung mit einer Transformationsgeometrie (42) ausgeführt ist, welcher mit einem Betätigungselement (4A) in formschlüssigem Eingriff steht,
wobei eine Verlagerung des Betätigungselements (4A) parallel zur Einschubachse (E) durch den formschlüssigen Eingriff mit der Transformationsgeometrie (42) eine Verlagerung des zweiten Indikatorelements (4) parallel zur Querachse (Q) bewirkt.

10. Indikatoreinheit (1) nach Anspruch 8,
wobei der Betätigungsabschnitt (41) als Vorsprung an dem, dem dritten Anzeigeabschnitt (43) gegenüberliegenden distalen Ende des zweiten Indikatorelements (4) ausgebildet und ausgelegt ist, eine Kraft entlang der Einschubachse (E) aufzunehmen,
wobei die Aussparung (44) zwischen dem dritten Anzeigeabschnitt (43) und dem Betätigungsabschnitt (41) angeordnet ist.

11. Indikatoreinheit (1) nach einem der Ansprüche 2 - 10,
wobei ein erster nicht verriegelter Zustand (O1) angezeigt wird, wenn der zweite Anzeigeabschnitt (32) und der dritte Anzeigeabschnitt (43) von der Sichtlinie (S) geschnitten werden, wobei der dritte Anzeigeabschnitt (43) den zweiten Anzeigeabschnitt (32) verdeckt,
wobei ein zweiter nicht verriegelter Zustand (O2) angezeigt wird, wenn der erste Anzeigeabschnitt (31) und der dritte Anzeigeabschnitt (43) von der Sichtlinie (S) geschnitten werden,
wobei ein dritter nicht verriegelter Zustand (O3) angezeigt wird, wenn der erste Anzeigeabschnitt (31) und keiner des zweiten und des dritten Anzeigeabschnitts (32, 43) von der Sichtlinie (S) geschnitten wird.

12. Verriegelungssystem (10) umfassend eine mobile Einheit (12) und eine Rahmeneinheit (14),
wobei die mobile Einheit (12) eine Indikatoreinheit (1) nach einem der vorhergehenden Ansprüche aufweist,
wobei die Rahmeneinheit (14) eine Aufnahmegeometrie (15) zur Aufnahme und Führung eines Eingriffsteils (13) der mobilen Einheit (12) entlang der Einschubachse (E) aufweist,
wobei die Rahmeneinheit (14) einen Halteabschnitt (16) aufweist, welcher zum formschlüssigen Eingriff mit dem Verriegelungsabschnitt (5) der Indikatoreinheit (1) ausgelegt und vorgesehen ist, um die mobile Einheit (12) gegen Verlagerung längs der Einschubachse (E) relativ zur Rahmeneinheit (14) zu sichern,
wobei die Indikatoreinheit (1) den Verriegelungszustand (V) nur dann anzeigt, wenn der Eingriffsteil (13) vollständig in die Aufnahmegeometrie (15) eingeschoben ist und der Verriegelungsabschnitt (5) im formschlüssigen Eingriff mit dem Halteabschnitt (16) steht.

13. Verriegelungssystem (10) nach Anspruch 12,
wobei die mobile Einheit (12) einen Handgriff (17) aufweist, welcher mit dem Verriegelungsabschnitt (5) derart gekoppelt ist, dass eine Verlagerung des Handgriffs (17) durch einen Anwender eine Verlagerung des Verriegelungsabschnitts (5) und des ersten Indikatorelements (3) bewirkt.

14. Transporteinheit (20), insbesondere zum Einsatz in einem Kinderwagen, aufweisend zwei voneinander beabstandete Verriegelungssysteme (10) nach einem der Ansprüche 12 oder 13,
wobei zwischen den Verriegelungssystemen (10) ein Grundabschnitt (20A) zur Ausbildung oder Festlegung eines Transportbereiches vorgesehen ist.

15. Verwendung einer Indikatoreinheit (1) nach einem der Ansprüche 1 - 11 in einer Transporteinheit (20) eines Kinderwagens.
